# EUROPEAN PATENT APPLICATION

(11) **EP 3 789 947 A1**
(43) Date of publication of application: **10.03.2021**
(21) Application number: 20194355.2
(22) Date of filing: 03.09.2020
(51) Int. Cl.: G06Q 20/40, G06Q 20/12, G06Q 30/06, G06Q 20/38

(54) **SYSTEM AND METHOD FOR VALIDATING MONETARY TRANSACTIONS**

(30) Priority: 05.09.2019 US 201916561062
(71) Applicant: Source Ltd., VLT1436 Valletta (MT)
(72) Inventor: UR, Shmuel, 2016400 Shorashim (IL); DUBINSKY, Ilya, 4464501 Kefar Sava (IL)
(74) Representative: Pearl Cohen Zedek Latzer Baratz UK LLP

(57) **Abstract**

A system and method for authenticating a monetary transaction may include scanning a website to identify a plurality of products sold at the website and a respective plurality of costs of the products; calculating a set of monetary transactions based on a respective set of combinations of products; receiving details of a monetary transaction and generating an authentication score for the transaction based on relating data in the monetary transaction to data in the set of monetary transactions.

## Description

### FIELD OF THE INVENTION

The present invention relates generally to securing online shopping. More specifically, the present invention relates to identifying suspicious monetary transactions related to online shopping.

### BACKGROUND OF THE INVENTION

Online shopping is widely used. In online shopping, sellers typically present products, prices and shipping costs in a website where buyers can select and buy products, payment method, shipping and the like. Online shopping is highly susceptible to fraud, e.g., since the buyer is not always seen by, or personally known to, the seller, payment is done using digital transactions.

In other cases, a fraud may be related to, or even performed by, an owner (or an authorized entity) of a website. For example, a merchant authorized to receive funds via a website may use the website to receive funds for another, unauthorized merchant. However, current or known systems and methods cannot readily identify and/or prevent a fraud carried out by an owner or authorized entity of a website.

### SUMMARY OF THE INVENTION

Some embodiments for authenticating a monetary transaction may include scanning a website to identify a plurality of products sold at the website and a respective plurality of costs of the products; calculating a set of monetary transactions based on a respective set of combinations of products, their respective costs, and shipping costs of at least some of the plurality of products; receiving details of a monetary transaction related to a purchase at the website; and generating an authentication score for the transaction based on relating data in the monetary transaction to data in the set of monetary transactions.

An authentication score may be generated based on a shipping address. A set of monetary transactions may be calculated based on one or more discount coupons. A discount coupon may be identified by relating data in transactions related to the website to data in the set of monetary transactions. A discount coupon may be identified based on a number of same or similar purchased items. An authentication score may be generated based on the number of product units purchased.

An authentication score may be generated based on a sequence of transactions. An authentication score may be generated based on a sequence of transactions that are related to a similar combination of products. An authentication score for a transaction may be calculated based on a sequence of transactions related to an unlikely combination of products purchased by a single transaction. Other aspects and/or advantages of the present invention are described herein.

### BRIEF DESCRIPTION OF THE DRAWINGS

Non-limiting examples of embodiments of the disclosure are described below with reference to figures attached hereto that are listed following this paragraph. Identical features that appear in more than one figure are generally labeled with a same label in all the figures in which they appear. A label labeling an icon representing a given feature of an embodiment of the disclosure in a figure may be used to reference the given feature. Dimensions of features shown in the figures are chosen for convenience and clarity of presentation and are not necessarily shown to scale. For example, the dimensions of some of the elements may be exaggerated relative to other elements for clarity, or several physical components may be included in one functional block or element. Further, where considered appropriate, reference numerals may be repeated among the figures to indicate corresponding or analogous elements.

The subject matter regarded as the invention is particularly pointed out and distinctly claimed in the concluding portion of the specification. The invention, however, both as to organization and method of operation, together with objects, features and advantages thereof, may best be understood by reference to the following detailed description when read with the accompanied drawings. Embodiments of the invention are illustrated by way of example and not of limitation in the figures of the accompanying drawings, in which like reference numerals indicate corresponding, analogous or similar elements, and in which:
Fig. 1 shows a block diagram of a computing device according to illustrative embodiments of the present invention;
Fig. 2 is an overview of a system according to illustrative embodiments of the present invention; and
Fig. 3 shows a flowchart of a method according to illustrative embodiments of the present invention.

### DETAILED DESCRIPTION OF THE INVENTION

In the following detailed description, numerous specific details are set forth in order to provide a thorough understanding of the invention. However, it will be understood by those skilled in the art that the present invention may be practiced without these specific details. In other instances, well-known methods, procedures, and components, modules, units and/or circuits have not been described in detail so as not to obscure the invention. Some features or elements described with respect to one embodiment may be combined with features or elements described with respect to other embodiments. For the sake of clarity, discussion of same or similar features or elements may not be repeated.

Although embodiments of the invention are not limited in this regard, discussions utilizing terms such as, for example, "processing," "computing," "calculating," "determining," "establishing", "analyzing", "checking", or the like, may refer to operation(s) and/or process(es) of a computer, a computing platform, a computing system, or other electronic computing device, that manipulates and/or transforms data represented as physical (e.g., electronic) quantities within the computer's registers and/or memories into other data similarly represented as physical quantities within the computer's registers and/or memories or other information non-transitory storage medium that may store instructions to perform operations and/or processes. Although embodiments of the invention are not limited in this regard, the terms "plurality" and "a plurality" as used herein may include, for example, "multiple" or "two or more". The terms "plurality" or "a plurality" may be used throughout the specification to describe two or more components, devices, elements, units, parameters, or the like. The term set when used herein may include one or more items.

Unless explicitly stated, the method embodiments described herein are not constrained to a particular order in time or to a chronological sequence. Additionally, some of the described method elements can occur, or be performed, simultaneously, at the same point in time, or concurrently. Some of the described method elements may be skipped, or they may be repeated, during a sequence of operations of a method.

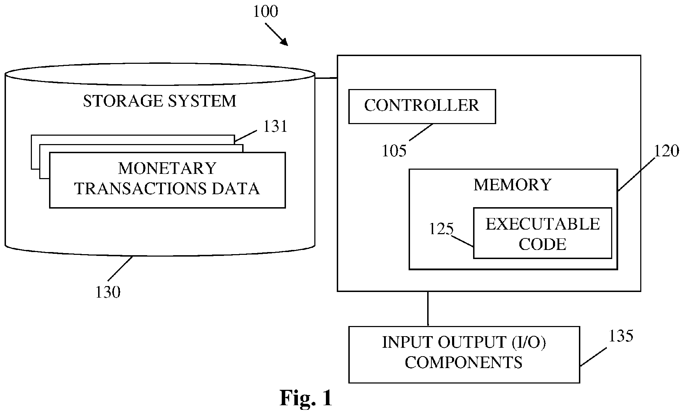

Reference is made to Fig. 1, showing a non-limiting, block diagram of a computing device or system 100 that may be used to validate monetary transactions according to some embodiments of the present invention. Computing device 100 may include a controller 105 that may be, or may include, a hardware controller. For example, computer hardware processor or hardware controller 105 may be, or may include, a central processing unit processor (CPU), a chip or any suitable computing or computational device. Computing system 100 may include a memory 120, executable code 125, a storage system 130 and input/output (I/O) components 135. Controller 105 (or one or more controllers or processors, possibly across multiple units or devices) may be configured (e.g., by executing software or code) to carry out methods described herein, and/or to execute or act as the various modules, units, etc., for example by executing software or by using dedicated circuitry. More than one computing devices 100 may be included in, and one or more computing devices 100 may be, or act as the components of, a system according to some embodiments of the invention.

Memory 120 may be a hardware memory. For example, memory 120 may be, or may include machine-readable media for storing software e.g., a Random-Access Memory (RAM), a read only memory (ROM), a memory chip, a Flash memory, a volatile and/or non-volatile memory or other suitable memory units or storage units. Memory 120 may be or may include a plurality of, possibly different memory units. Memory 120 may be a computer or processor non-transitory readable medium, or a computer non-transitory storage medium, e.g., a RAM. Some embodiments may include a non-transitory storage medium having stored thereon instructions which when executed cause the processor to carry out methods disclosed herein.

Executable code 125 may be an application, a program, a process, task or script. A program, application or software as referred to herein may be any type of instructions, e.g., firmware, middleware, microcode, hardware description language etc. that, when executed by one or more hardware processors or controllers 105, cause a processing system or device (e.g., system 100) to perform the various functions described herein.

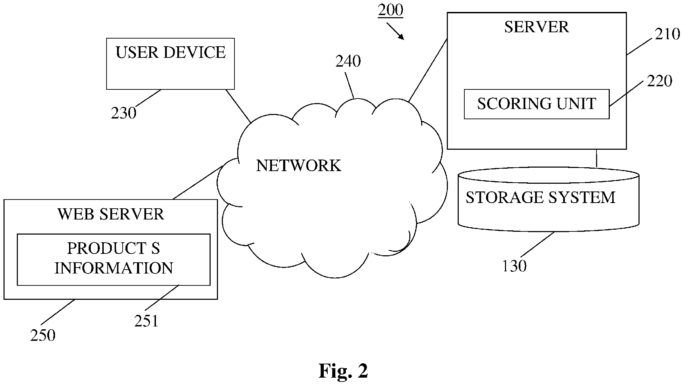

Executable code 125 may be executed by controller 105 possibly under control of an operating system. For example, executable code 125 may be an application that validates monetary transactions or associates monetary transactions with a score as further described herein. Although, for the sake of clarity, a single item of executable code 125 is shown in Fig. 1, a system according to some embodiments of the invention may include a plurality of executable code segments similar to executable code 125 that may be loaded into memory 120 and may cause controller 105 to carry out methods described herein. For example, units or modules described herein, e.g., server 210, web serve 250 and user device 240 shown in Fig. 2, may be, or may include, controller 105, memory 120 and executable code 125.

Storage system 130 may be or may include, for example, a hard disk drive, a CD-Recordable (CD-R) drive, a Blu-ray disk (BD), a universal serial bus (USB) device or other suitable removable and/or fixed storage unit. As shown, storage system 130 may include set of monetary transactions data 131 that may be calculated and/or determined as further described herein.

Monetary transactions data 131 (or other Data objects such as files, database tales, etc.) may be any suitable digital data structure or construct or computer data objects that enables storing, retrieving and modifying values. For example, monetary transactions 131 may be, or may be included in, files, tables or lists in a database in storage system 130, and may include a number of fields that can be set or cleared, a plurality of parameters for which values can be set, a plurality of entries that may be modified and so on. For example, details related to specific monetary transactions, e.g., amounts, combinations of products and so on may be recorded in monetary transactions 131.

Content may be loaded from storage system 130 into memory 120 where it may be processed by controller 105. For example, monetary transactions data 131 may be loaded into memory 120 and used for authenticating, validating or scoring transactions as further described herein.

I/O components 135, may be used for connecting (e.g., via included ports), or they may include: a mouse; a keyboard; a touch screen or pad or any suitable input device. I/O components may include one or more screens, touchscreens, displays or monitors, speakers and/or any other suitable output devices. Any applicable I/O components may be connected to computing device 100 as shown by I/O components 135, for example, a wired or wireless network interface card (NIC), a universal serial bus (USB) device or an external hard drive may be included in I/O components 135.

A system according to some embodiments of the invention may include components such as, but not limited to, a plurality of central processing units (CPU) or any other suitable multipurpose or specific processors, controllers, microprocessors, microcontrollers, field programmable gate arrays (FPGAs), programmable logic devices (PLDs) or application-specific integrated circuits (ASIC). A system according to some embodiments of the invention may include a plurality of input units, a plurality of output units, a plurality of memory units, and a plurality of storage units. A system may additionally include other suitable hardware components and/or software components. In some embodiments, a system may include or may be, for example, a personal computer, a desktop computer, a laptop computer, a workstation, a server computer, a network device, or any other suitable computing device.

Reference is made to Fig. 2, which is an overview of a system 200 according to some embodiments of the present invention. As shown, a system 200 may include a server 210 that may be any suitable computing device (e.g., a network server). As shown, server 210 may include a scoring unit 220 that may examine web pages presented by web server 250, create and/or update monetary transactions data 131. As further described herein, scoring unit 220 may examine or analyze information in a monetary transaction, relate the information to data in monetary transactions data 131 and score, validate or authenticate the monetary transaction as further described herein. As described herein, upon identifying a suspicious transaction, an embodiment may perform one or more actions, e.g., associate the transaction with a low score, send an email to a predefined list of recipients, popup a message on a computer screen and so on. It will be understood that when flagging or scoring a transaction is described herein, additional steps may be taken, e.g., generate or send an alert.

As further shown, system 200 may include, or may be operatively connected to, a web server 250 that may be any suitable server used for running or maintaining a web site and system 200 may include, or may be operatively connected to, at least one user device 230 that may be a personal computer, laptop computer, smartphone or any other computing device enabling a user to communicate, over network 240, with web server 250.

Network 240 may be, may comprise or may be part of a private or public IP network, or the internet, or a combination thereof. Additionally or alternatively, network 240 may be, comprise or be part of a global system for mobile communications (GSM) network. For example, network 240 may include or comprise an IP network such as the internet, a GSM related network and any equipment for bridging or otherwise connecting such networks as known in the art. In addition, network 240 may be, may comprise or be part of an integrated services digital network (ISDN), a public switched telephone network (PSTN), a public or private data network, a local area network (LAN), a metropolitan area network (MAN), a wide area network (WAN), a wireline or wireless network, a local, regional, or global communication network, a satellite communication network, a cellular communication network, any combination of the preceding and/or any other suitable communication means. Accordingly, numerous elements of network 240 are implied but not shown, e.g., access points, base stations, communication satellites, GPS satellites, routers, telephone switches, etc. It will be recognized that embodiments of the invention are not limited by the nature of network 240.

Where applicable, computing devices, modules or units described herein, may be similar to, or may include components of, device 100 described herein. For example, scoring unit 220 may include a controller 105, memory 120 and executable code 125. Accordingly, operations performed by scoring unit 220 or server 210 as described herein may be performed by controller 105, that is, controller 105 may be adapted or configured to perform any operation, step, logic or method described herein with reference to scoring unit 220 and/or server 210.

In a typical case or scenario, a merchant operates or uses web server 250 to sell products. A customer, user or buyer uses device 230 to surf to a web site provided by server 250. Typically, in order to pay for products and/or complete a purchase, customer, user or buyer initiates a credit card or other monetary transaction in which the server 250 (on behalf of the merchant) requests funds to be transferred from the customer to the merchant.

In some embodiments, scoring unit 220 may scan a web site and may record and analyze products sold at the web site. For example, assuming products A, B, C, D and E are sold in a website supported or operated by server 250, products data 251 presented by the website may include individual prices of products A, B, C, D and E, their respective type or description (e.g., product A may be plums, product B may be a basketball and so on).

Products data 251 may include any information related to products sold by a web site. For example, products data 251 may include, for each of products A, B, C, D and E, a shipping cost (e.g., based on a shipping address), a discount, whether or not discount coupons may be used for purchasing the product and so on.

Based on products types, their respective costs and shipping costs, an embodiment may calculate, generate and/or record (e.g., in monetary transactions data 131) various combinations representing various purchases of one or more products. For example, for every combination (or set) of products sold in a website, the aggregated cost may be calculated. A cost of shipment may further be determined (e.g., calculated or deduced) for the set of products.

For example, assuming that the costs of products A, B, C, D and E are $9.99, $12.99, $15.99, $19.99 and $34.99, respectively, shipping costs for any of these products are $0, $8 or $13 and discounts are 5% or 8% (e.g., for a single purchase of $100 or more). For simplicity, a purchase of a set or combination of products is denoted using their respective character, e.g., a purchase of products A and B is denoted herein as AB. With the A, B, C, D and E notation in mind, and following the above example of prices or costs, an embodiment may calculate possible or likely costs (which may be included in monetary transactions data 131 as described). For example, staying with the above example, possible or likely costs may be $22.98 for "AB" (a purchase of one product A and one product B), $24.98 for purchasing AC, $28.98 for purchasing products B and C, $29.97 for 3A (buying 3 items of type A), and so on.

Accordingly, a set of monetary transactions (and more specifically, amounts in monetary transactions) that reflect possible or likely transactions resulting from purchases of sets or combinations of products, at a website, may be created and stored, or recorded, e.g., in monetary transactions data 131. For example, a set of likely amounts in monetary transactions may be included in (or viewed as) a white list and a high score may be associated with transactions that include one of the white listed amounts.

For example, a first likely, possible or white-listed amount in a transaction may be the price of the cheapest product that can be purchased in a website. For example, following the above example, $9.99 may be the minimum amount possible in a legitimate, non-fraudulent transaction. An embodiment may calculate additional likely, possible or white-listed amount by adding to a calculated amount the cost or price of the cheapest product. Of course, adding the cost of the cheapest product may be done for any amount calculated as described. For example, a first likely, possible or white-listed amount may be $15.99 (a purchase of product C) and the next likely, possible or white-listed amount may be $25.98, which reflects a purchase of product C and product A (which is the cheapest product in the set).

A set of likely, possible or white-listed amounts in transactions may be created based on shipping costs. For example, an embodiment may calculate, for any sets or number of combinations of products, one or more costs of shipping the set or combination. For example, based on where products are shipped from (e.g., an address or location of a dispatch facility provided by the merchant) and based on a shipping address of the customer (e.g., determined as described herein), an embodiment may calculate shipping costs for a combination of products that were purchased. An embodiment may thus calculate likely, possible or white-listed amounts in a transaction based on a set or combination of products and further based on shipping costs.

Any information related to shipping may be used for calculating likely, possible or white-listed amounts. For example, by analyzing data in a website, scoring unit 220 may automatically identify or determine that free shipping is provided for purchases above $500, for a specific product, same day shipping is $5, shipping of five or more products is $3, depending on time of delivery, shipping of a product can be $5.99, $7.99 and $10.99, and so on. Accordingly, an embodiment may calculate likely, possible or white-listed amounts in transactions based on prices of any combination of any number of products' types and further based on one or more shipping methods offered by a website.

An embodiment may calculate likely, possible or white-listed amounts in transactions based on discounts, e.g., according to discount coupons usable in a website. For example, assuming coupons providing discounts of 5% and 8% can be used in a website, an embodiment may identify likely, possible or white-listed amounts in transactions reflecting a purchase of product A may be $9.99 (no discount), $9.49 (5% coupon or discount) and $9.19 (8% coupon or discount). Accordingly, an embodiment may identify, calculate, create and record (e.g., monetary transactions data 131) likely, possible or white-listed amounts in transactions based on discounts.

In some cases, discounts may not be readily identified in, or extracted from data in a website. Furthermore, it may be that, after selecting a product, the buyer is asked to provide a coupon code or other information related to a discount (e.g., membership and the like). Some embodiments may automatically identify discounts or coupons and use such automatically identified discounts in creating a list of likely, possible or white-listed amounts in transactions.

For example, some embodiments may search (e.g., the internet) for discounts provided by the merchant associated with the website supported by web server 250. For example, an automated service that searches the internet for coupons for a specific website or merchant may scan the internet, find and provide a list of coupons (and their respective discounts, e.g., percentage or other discounts) usable for a specific merchant or website.

In some embodiments, discounts may be identified based on actual transactions. For example, having identified a set of likely, possible or white-listed amounts in transactions as described, an embodiment may examine actual amounts in transactions related to a website, compare the actual amounts to white-listed amounts and identify a correlation that indicates a discount. For example, having determined that $9.99 is a legitimate amount (e.g., related to a purchase of product A) and further identifying a set of transactions each with an amount of $9.49, an embodiment may determine that a coupon or discount of 5% is usable at the web site, and, accordingly, an embodiment may include both $9.99 and $9.49 in a table or other construct of white-listed amounts in transactions, e.g., in monetary transactions data 131. Accordingly, an embodiment may identify discounts based on examining a relationship between possible and actually paid amounts.

Some embodiments may identify a coupon or a discount based on a number or quantity of same or similar items purchased. For example, if a coupon grants a discount if three chocolate bars are purchased together, then buyers may be likely to buy three chocolate bars and not two or four. Accordingly, having identified that a purchase of three chocolate bars occurs often (e.g., more than a threshold of 45% of the purchases are of three chocolate bars), an embodiment may determine that there exists a coupon or discount for three chocolate bars.

Using a white list that may include, or be created based on, one or more of: transaction amounts, shipment addresses and/or methods, discounts, user demographic data and publicly available information as described, some embodiments of the invention may identify various cases related to fraud as described. For example, some embodiments may identify transactions that make little sense and associate such transactions with a score that reflects a possible fraud, e.g., using a value of a score as described.

Some embodiments may identify transactions that may be fine (e.g., related to a possible purchase) but should not (or are not expected to) be very common (e.g., a transaction related to a purchase of five toy trucks and two tomatoes). For example, if, using his credentials or authorization as described, a first merchant attempts to sell products of another, second merchant (where the products of the second merchant are not listed or sold at the website), then transactions related to such attempts may map to surprising combinations of products as in the above toy trucks and tomatoes example. Moreover, repeating attempts to sell a specific product of the second merchant may cause an embodiment to identify a sequence of purchases of the same unlikely or suspicious combination. For example, assuming that the price of an electric drill sold by the second merchant is exactly the price of five toy trucks and two tomatoes, purchases of the electric drill (when made via the website of the first merchant) will cause an embodiment to detect an unlikely combination of products (five toy trucks and two tomatoes) that is repeatedly purchased, and, accordingly, an embodiment may warn, block or flag such purchases.

A score associated, by an embodiment, with such transactions may reflect the unlikelihood of such transactions being related to legitimate purchases, that is, purchases made at the website being protected as described. As described, upon detecting suspicious transactions, an embodiment may forward a score and the transaction to a security entity that may decide whether or not to permit the transaction to take place.

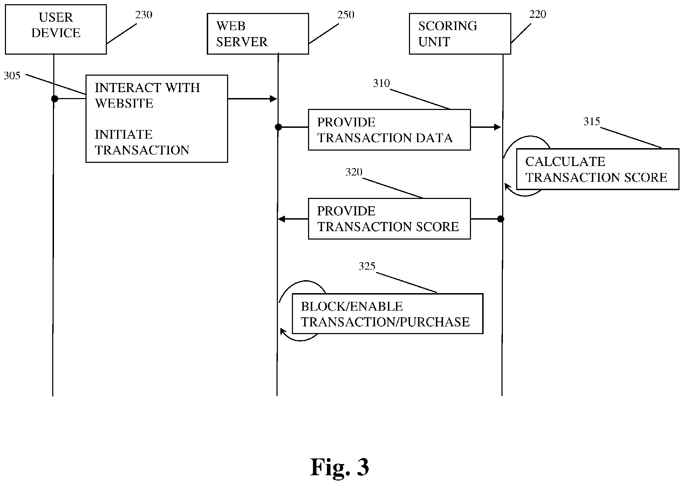

Reference is made to Fig. 3, which shows a flowchart of a method according to illustrative embodiments of the present invention. As shown by block 305, a user (customer or buyer) may use user device 230 to interact with web server 250, e.g., using user device 230, a user surfs to a website and selects a product s/he wants to buy. As further shown by block 305, a user may initiate a monetary transaction, e.g., fill out credit card details and click on a "complete purchase" button. As shown by block 310, transaction data may be provided to scoring unit 220. For example, transaction data provided as shown by block 310 may include name and other identifying information of the merchant, information identifying the online store where a purchase was made, information identifying the buyer (e.g., name, home or other address), a shipping address and the like. For example, a buyer may have a profile at a website where the profile includes name, home and/or shipping address, history of purchases and so on, and any information included in, or available to, webserver 250 may be provided to a system 200. Accordingly, some embodiments of the invention may score transactions as described herein based on demographic or other user information.

Data provided to scoring unit 220 may be collected and/or generated by server 250 and/or by any other entity, e.g., an entity participating in a purchase of a product. As shown by block 320, based on a score provided, server 250 (or any other relevant entity) may select to either block or enable a transaction

As shown by block 315, an embodiment (e.g., scoring unit 220) may calculate a transaction score for a transaction. As shown by block 320, an embodiment may provide a transaction score. For example, scoring unit 220 may provide a score to server 250 as shown or the score may be provided to any other entity, e.g., a bank, a credit card company and the like. As shown by block 325, an embodiment may select to block or prevent a transaction or a purchase based on a score provided as described, in other cases, based on a score, an embodiment may enable or permit a purchase and/or transaction.

For example, scoring unit 220 may associate a suspicious or unlikely transaction with a low score (e.g., 1 out of 10), and, provided with such low score, server 250 may prevent a user from completing a purchase of a product. In another case, if scoring unit 220 associates a transaction with a high score (e.g., 9 out of 10), server 250 may permit or enable a purchase and its related transaction to proceed.

In some embodiments, operations described and shown by blocks 310, 315 and 320 may be performed in real-time. The term "real-time" (also known and referred to in the art as "realtime", or "real time") as referred to herein generally relates to processing or handling of events at the rate or pace that the events occur or are received (possibly defined by human perception). For example, a system according to some embodiments of the invention may calculate a score for a transaction in real-time, e.g., within milliseconds or other very brief periods so that a score is provided, e.g., to server 250, virtually immediately after a buyer initiates a transaction but before the transaction is carried out or executed.

Various rules, criteria and logic, as well as any information, may be used by some embodiments of the invention to calculate a score as shown by block 315. For example, a rule used for identifying suspicious transactions may be related to the number of similar (or same) products bought. For example, assuming product A is a shirt that costs $9.99, and further assuming that a customer is highly unlikely to by more than three shirts, a transaction with an amount of $39.96 may be identified as related to buying four shirts and may be flagged, e.g., associated with a low score of "5".

A score may be, may include or may represent a confidence level of a transaction being related to fraud. For example, staying with the above example where product A is a shirt, identifying a purchase of five shirts (e.g., based on a transaction amount of 5x$9.99=$49.95) may cause scoring unit 220 to associate the transaction with a score of "4", identifying an intended purchase of six shirts may cause scoring unit 220 to associate the transaction with a score of "2", and so on. In some embodiments, an action taken may be based on the value of a score, e.g., web server 250 may permit or enable transactions with a score that is higher than "6" and block, prevent and/or report all transactions with a score lower than six. In some embodiments, a threshold used for blocking or allowing transactions may be based on an amount, user demographic data, location and so on. For example, transactions with an amount greater than $150 may be enabled only if the score provided by scoring unit 220 is higher than "7", while transactions with an amount between $50 and $150 may be allowed if the score provided by scoring unit 220 is higher than "4". Any other thresholds may be used. For example, thresholds as described herein may be dynamically and automatically changed according to a time of day when a purchase is made, a location of the buyer and so on.

In some embodiments, monetary transactions data 131 may include a mapping between (or from) a number of units of a product and cost or amount. For example, staying with the above example, a transaction with an amount of $29.97 may be mapped to, or identified as, a purchase of three units of product A as described. In the above example where A is a shirt, identifying a purchase of five shirts may be based on a mapping of $49.95 to five items of type A. Various rules may be used, for example, a rule including a threshold of three items of product A may cause scoring unit 220 to associate a transaction for $49.95 with a low score by first mapping $49.95 to three items of product A and then apply a rule (which says buying more than three items of this type is suspicious) for product A.

Of course, a single, specific amount in a transaction (e.g., $29.97) may be mapped to a number of combinations of products, and, in such case, an embodiment may apply operations as described herein to each combination of products and a score for a transaction as may be set based on a set of scores calculated for each of the possible combination of products. An embodiment may further categorize products sold in a web site. For example, an embodiment may analyze a website and categorize products, e.g., categories of products may be "fruits", "sporting goods" and so on.

In some embodiments, a rule for setting a transaction score may be related to the type of a product and the shipping method. It is noted that, by scanning a website as described, identifying and calculating possible or likely amounts in transactions and by further mapping amounts to product combinations, an embodiment of the invention can provide advantages that are impossible using current or known systems or methods. For example, being able to determine which products are bought based on an amount in a transaction as described, some embodiments of the invention may determine whether or not a shipping method is normal (likely) or suspicious. For example, an overseas shipment of fruit is unlikely and may be identified by scoring unit 220. For example, being able to determine which products are bought based on an amount in a transaction as described, some embodiments of the invention may determine whether or not a combination of products about to be purchased in a single transaction is normal (likely) or suspicious (unlikely). Some embodiments may determine whether or not a combination of products about to be purchased in a single transaction is normal (likely) or suspicious (unlikely) based on examining transactions and identifying a sequence of transactions that is related to a repeating purchase of unexpected quantities of products. For example, if 20% of the transactions are identified as a purchase of thirteen melons and four tuna fish cans (a surprising combination of products), then, having identified an unlikely sequence, an embodiment may flag or even block transactions related to a purchase of thirteen melons and four tuna fish cans.

For example, based on an amount in a transaction, scoring unit 220 may determine that the product a user wants to buy is two pounds of oranges which are to be shipped using a shipment method that will result in delivering the oranges in two weeks, in such example, using a rule that flags a slow shipment method for fruits, scoring unit 220 may associate the transaction with a low score, which may in turn cause server 250 to block or prevent the transaction. Similarly, an expensive shipment (e.g., for fast delivery) of some products may be identified as a potential malicious activity and result in an embodiment flagging a transaction by associating it with a low score which is reported, e.g., to server 250 as described. It is noted that rules applied by scoring unit 220 may be dynamically updated (learned) by system 200. For example, adapted to map transaction amounts to products and shipping methods, scoring unit 220 may record, e.g., during a learning phase, what type of shipping is typically used for each type of products in a website, and scoring unit 220 may further configure a rule for each type of product, e.g., set a rule that flags a shipping method, a large number of items or units of a single product, an unlikely combination of products and so on. In another example, a transaction related to a purchase of 0.12 kilograms of plums may be identified or detected as described as unlikely (suspicious) and may be flagged or scored low as described.

As described, some embodiments may identify or determine a mapping between combinations of products and shipping methods and amounts in transactions. An amount in a transaction may additionally be mapped to a discount (e.g., a discount coupon used in a website). For example, a white list of amounts may be calculated based on combinations of product, their respective costs and further based on a discount. Accordingly, rules related to discounts may be used by scoring unit 220. For example, a discount coupon never used before by a specific user may cause scoring unit 220 to flag the transaction, e.g., associate the transaction with a low score, send an email to a predefined set of recipients, popup a message on a computer screen and so on.

In some embodiments, scoring a transaction may be based on the combination of a product and a shipping address. For example, some embodiments may identify suspicious activity (e.g., fraudulent transactions) based on a shipping address of some products. For example, a transaction related to shipment of non-kosher food to a specific address may be flagged (associated with a low score), a purchase of football items of a competing team and so on. It will be noted that, in order to perform methods described herein, some embodiments of the invention may obtain and use any information, e.g., publicly available information on the Internet that identifies users, information provided by various authorities and so on. For example, having classified products as kosher or non-kosher, further identifying, based on a transaction as described, that non-kosher food is about to be purchased and shipped to a specific neighborhood, and further using information indicating a religion of a majority of people in the neighborhood, an embodiment may flag or even block the transaction or purchase.

As described, some embodiments of the invention may determine whether or not a transaction is suspicious (and should be flagged, blocked or cause alerting a user or other entity) may be based on any one of: a combination of products purchased and their respective costs, a shipping cost, a shipping address and a discount (e.g., a coupon).

Some embodiments of the invention that may determine whether or not a transaction is suspicious and should be flagged, blocked or that may cause alerting a user or other entity may be based on any one of: number of product units purchased, a sequence of transactions and/or repeating purchases of similar or same combinations of products.

For example, based on details in a monetary transaction related to a purchase, e.g., a sum or amount therein, some embodiments may determine or identify any one of: a combination of products purchased and their respective costs, a shipping cost, a shipping address, a discount (e.g., a coupon), the number of product units purchased, a sequence of transactions and/or repeating purchases of similar or same combinations of products.

As described, the sum or amount in a monetary transaction may be mapped or translated, e.g., by scoring unit 220, to a specific number of items or to a specific set or combination of items. Of course, in some cases, a specific amount may match two or more different items or products, e.g., an amount may be the price of an electric appliance (e.g., kitchen mixer) or the price of two hundred pairs of socks. If an amount in a monetary transaction can be mapped to, or associated with, a number of different items or sets of items, scoring unit 220 may inspect additional information in order to identify products purchased by the transaction.

For example, staying with the above mixer and socks example, if the shipping address is a home address, then it may be assumed that the item purchased is a mixer, as it is unlikely that an individual person would buy two hundred pairs of socks. Any other data elements related to a monetary transaction may be taken into account when determining whether or not a transaction is suspicious. For example, staying with the above mixer and socks example, a shipping cost of $50 may cause scoring unit 220 to determine that a mixer was purchased, as it is unlikely that a person would pay $50 for shipment of socks, or a history showing that the same buyer bought socks in the past may rule out socks, and so on.

Some embodiments of the invention may use any parts of data identified as described. For example, scoring unit 220 may automatically identify or recognize, (e.g., based on a sum of money in a transaction) data elements such as: a combination of products purchased and their respective costs; a shipping cost; a shipping address; a discount (e.g., a coupon); the number of product units purchased; a sequence of transactions and/or repeating purchases of similar or same combinations of products. Scoring unit 220 may apply any rule or logic to one or more of the identified data elements.

For example, having identified the above mentioned data elements, scoring unit 220 may flag a transaction based on the shipment address being a Post Office Box (P.O.B.) and not a home address, or scoring unit 220 may flag a transaction based on a specific product being shipped to a home address, e.g., a manufacturing tool is typically sent to a factory, such that rule or logic in scoring unit 220 may flag a shipment of a manufacturing tool to a home address (e.g., the home address of the buyer).

In another example, scoring unit 220 may flag a transaction based on a combination of number of product units and shipping address, e.g., twenty dolls sent to a home address and not to a business address may be suspicious and acted upon as described. In another example, scoring unit 220 may flag a transaction based on a combination of a shipping cost and a product, e.g., shipping a product worth $2 at a cost of $50 may be suspicious and acted upon as described. Accordingly, some embodiments of the invention may generate an authentication score for a transaction based on any combination of data elements automatically identified as described.

In some embodiments, odd, surprising, unlikely or rare combinations of products may be identified and flagged or cause an embodiment to generate an alert, for example, a transaction related to a purchase of twenty-one basketballs or a transaction related to a purchase of a doll and an electric drill may be identified (e.g., by scoring unit 220, based on a mapping of combinations of products to amounts in transactions) and an embodiment may flag the transaction, block the transaction or perform one or more actions.

Any system or method may be used by embodiments of the invention to receive details of a monetary transaction related to a purchase at a website. For example, details of a monetary transaction may be provided to scoring unit 220 by web server 250, which may obtain some of the details of a monetary transaction from a buyer and/or may add details to a monetary transaction. In other cases, details of a monetary transaction may be received, e.g., by scoring unit 220, from a bank or other relevant entity. It will accordingly be understood that the scope of the invention is not limited by the system or method used for obtaining or receiving details of a monetary transaction.

An action taken by an embodiment may be a warning regarding a merchant. For example, upon identifying an uncommon transaction that is repeated, an embodiment may send a warning to an entity (e.g., bank, credit card company etc.) that controls or supervises an account. For example, an embodiment may inform a supervisor that a lot of transactions (e.g., 20% of all transactions in the last 24 hours) are for $211.82, and this may indicate that a lot of buyers are doing something fishy, e.g., they all buy fourteen dolls and two bikes. This kind of warning may enable a supervisor to readily and easily identify, for example, that a merchant is covering for activities or transactions that are unrelated to his or her website, e.g., goods from another merchant are sold through the merchant's website.

An embodiment may classify transactions, e.g., a transaction may be classified as one of normal, unusual or impossible. For example, a score between "0" and "3" may mean, or indicate the transaction is an impossible one and is highly likely to be related to a fraud, a score between "4" and "7" may mean, or indicate the transaction is unusual and a score between "8" and "10" may mean, or indicate the transaction is normal. The actual value of the score may be a confidence or severity level. For example, a score of "0" may mean the transaction is highly likely a fraud, and a score of "3" may mean the transaction is (not highly) likely a fraud.

Some embodiments may identify (and flag or score) transactions based on a sequence or set of transactions. For example, a set or sequence of same or similar amounts in a respective sequence or set of transactions in a predefined time interval may be identified. For example, ten transactions related to purchasing 1.5 kilograms of oranges (similar transactions) in a single day (predefined time interval) may breach a rule used by scoring unit 220 and may cause unit 220 to generate an alert, associate transactions (e.g., future purchases of 1.5 kilograms of oranges) with a low score and so on.

An embodiment may periodically, or based on an event or command, scan (or rescan) a website to update or refresh rules, white lists, generate or updates various mappings between any combination of: amounts; product types; combinations of products in a single purchase; shipment costs and any other data as described herein. Accordingly, mappings, rules and operations described herein may be dynamically, periodically or continuously update. For example, an addition of a product to a website or an update of a price may trigger scoring unit 220 to rescan the website.

In the description and claims of the present application, each of the verbs, "comprise" "include" and "have", and conjugates thereof, are used to indicate that the object or objects of the verb are not necessarily a complete listing of components, elements or parts of the subject or subjects of the verb. Unless otherwise stated, adjectives such as "substantially" and "about" modifying a condition or relationship characteristic of a feature or features of an embodiment of the disclosure, are understood to mean that the condition or characteristic is defined to within tolerances that are acceptable for operation of an embodiment as described. In addition, the word "or" is considered to be the inclusive "or" rather than the exclusive or, and indicates at least one of, or any combination of items it conjoins.

Descriptions of embodiments of the invention in the present application are provided by way of example and are not intended to limit the scope of the invention. The described embodiments comprise different features, not all of which are required in all embodiments. Some embodiments utilize only some of the features or possible combinations of the features. Variations of embodiments of the invention that are described, and embodiments comprising different combinations of features noted in the described embodiments, will occur to a person having ordinary skill in the art. The scope of the invention is limited only by the claims.

While certain features of the invention have been illustrated and described herein, many modifications, substitutions, changes, and equivalents may occur to those skilled in the art. It is, therefore, to be understood that the appended claims are intended to cover all such modifications and changes as fall within the true spirit of the invention.

Various embodiments have been presented. Each of these embodiments may of course include features from other embodiments presented, and embodiments not specifically described may include various features described herein.
The subject matter of the following clauses is also included in the description:

### CLAUSES

1. A computer-implemented method of authenticating a monetary transaction, the method comprising:
   scanning a website to identify a plurality of products sold at the website and a respective plurality of costs of the products;
   calculating a set of monetary transactions based on a respective set of combinations of products, their respective costs, and shipping costs of at least some of the plurality of products;
   receiving details of a monetary transaction related to a purchase at the website; and
   generating an authentication score for the transaction based on relating data in the monetary transaction to data in the set of monetary transactions.
2. The method of clause 1, wherein the authentication score is generated based on a shipping address.
3. The method of clause 1, wherein the set of monetary transactions is calculated based on one or more discount coupons.
4. The method of clause 3, wherein a discount coupon is identified by relating data in transactions related to the website to data in the set of monetary transactions.
5. The method of clause 3, wherein a discount coupon is identified based on a number of same or similar purchased items.
6. The method of clause 1, wherein the authentication score is generated based on the number of product units purchased.
7. The method of clause 1, wherein the authentication score is generated based on a sequence of transactions.
8. The method of clause 6, wherein the transactions in the sequence include a similar combination of products.
9. A computer-implemented method of authenticating a monetary transaction, the method comprising:
   scanning a website to identify a plurality of products sold at the website and a respective plurality of costs of the products;
   calculating a set of monetary transactions based on a respective set of combinations of products and their respective costs;
   receiving details of a monetary transactions related to a purchase at the website; and
   generating an authentication score for a transaction based on a sequence of transactions related to an unlikely combination of products purchased by a single transaction.
10. A system comprising:
   a memory; and
   a controller configured to:
      scan a website to identify a plurality of products sold at the website and a respective plurality of costs of the products;
      calculate a set of monetary transactions based on a respective set of combinations of products, their respective costs, and shipping costs of at least some of the plurality of products;
      receive details of a monetary transaction related to a purchase at the website; and
      generate an authentication score for the transaction based on relating data in the monetary transaction to data in the set of monetary transactions.
11. The system of clause 10, wherein the authentication score is generated based on a shipping address.
12. The system of clause 10, wherein the set of monetary transactions is calculated based on one or more discount coupons.
13. The system of clause 12, wherein a discount coupon is identified by relating data in transactions related to the website to data in the set of monetary transactions.
14. The system of clause 12, wherein a discount coupon is identified based on a number of same or similar purchased items.
15. The system of clause 10, wherein the authentication score is generated based on the number of product units purchased.
16. The system of clause 10, wherein the authentication score is generated based on a sequence of transactions.
17. The system of clause 16, wherein the transactions in the sequence include a similar combination of products.

## Claims

1. A computer-implemented method of authenticating a monetary transaction, the method comprising:
scanning a website to identify a plurality of products sold at the website and a respective plurality of costs of the products;
calculating a set of monetary transactions based on a respective set of combinations of products, their respective costs, and shipping costs of at least some of the plurality of products;
receiving details of a monetary transaction related to a purchase at the website; and
generating an authentication score for the transaction based on relating data in the monetary transaction to data in the set of monetary transactions.

2. The method of claim 1, wherein the authentication score is generated based on a shipping address.

3. The method of claim 1 or claim 2, wherein the set of monetary transactions is calculated based on one or more discount coupons.

4. The method of claim 3, wherein a discount coupon is identified by one of:
relating data in transactions related to the website to data in the set of monetary transactions; based on a number of same or similar purchased items.

5. The method according to any one of the preceding claims, wherein the authentication score is generated based on the number of product units purchased.

6. The method according to any one of the preceding claims, wherein the authentication score is generated based on a sequence of transactions.

7. The method of claim 6, wherein the transactions in the sequence include a similar combination of products.

8. A system (200) comprising:
a memory(120); and
a controller (210) configured to:
scan a website to identify a plurality of products sold at the website and a respective plurality of costs of the products;
calculate a set of monetary transactions based on a respective set of combinations of products, their respective costs, and shipping costs of at least some of the plurality of products;
receive details of a monetary transaction related to a purchase at the website; and
generate an authentication score for the transaction based on relating data in the monetary transaction to data in the set of monetary transactions.

9. The system of claim 8, wherein the authentication score is generated based on a shipping address.

10. The system of claim 8 or claim 9, wherein the set of monetary transactions is calculated based on one or more discount coupons.

11. The system of claim 10, wherein a discount coupon is identified by relating data in transactions related to the website to data in the set of monetary transactions.

12. The system of claim 10, wherein a discount coupon is identified based on a number of same or similar purchased items.

13. The system according to any one of claims 8-12, wherein the authentication score is generated based on the number of product units purchased.

14. The system according to any one of claims 8-13, wherein the authentication score is generated based on a sequence of transactions.

15. The system of claim 14, wherein the transactions in the sequence include a similar combination of products.
